(19) Europäisches Patentamt European Patent Office Office européen des brevets

(11) EP 2 759 864 A1

(12) EUROPEAN PATENT APPLICATION

(43) Date of publication:
30.07.2014 Bulletin 2014/31

(51) Int Cl.:
G02B 27/22 (2006.01)     G02B 5/28 (2006.01)

(21) Application number: 14152675.6

(22) Date of filing: 27.01.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.01.2013 KR 20130009502

(71) Applicant: Samsung Electronics Co., Ltd
Gyeonggi-do 443-742 (KR)

(72) Inventor: Shin, Chang-gyun
Gyeonggi-do 449-712 (KR)

(74) Representative: Ertl, Nicholas Justin
Elkington and Fife LLP
Prospect House
8 Pembroke Road
Sevenoaks
Kent TN13 1XR (GB)

(54) **Glasses-free reflective 3D color display**

(57) A glasses-free reflective 3D color display includes a reflective color display configured to display a reflective color image by using light entering from the outside and configured to form a left eye image and a right eye image, and a lens array configured so that each lens corresponds to a pair of pixels of the reflective color display and configured to separate the left eye image and the right eye image formed in the reflective color display.

FIG. 1

**Description**

FIELD OF THE INVENTION

The present disclosure relates to glasses-free reflective 3D color displays.

BACKGROUND OF THE INVENTION

In the case of outdoor advertising displays that use external light or mobile displays that are expected to be used outdoors, such as mobile phones or mobile game machines, it is necessary to make sure that the displays remain visible regardless of the ambient brightness. In a bright environment, image contrast of a display may be reduced since ambient light reaches the eyes of viewers after being reflected by a surface of the display. Also, light reflected by the surface of the display and light emitted from a panel of the display may be mixed. This may be a cause of reduced color purity of the display. Thus, when it is required to use the display for long hours, reducing the power consumption of the panel is possible using a reflective display that uses ambient light as a light source.

Generally, displays are desired to have low power consumption and high performance. A representative example of a low power consumption display is a reflective display that uses external light as a light source, and a representative example of a high performance display is a 3D display. Accordingly, a reflective 3D display that simultaneously has low power consumption and high performance is considered to be the next generation display.

In order to display a 3D image on a reflective display outdoors, a glasses-free reflective 3D display is convenient for use instead of a stereoscopic display that additionally requires the use of a pair of glasses. A parallax barrier and a lenticular lens method are typical methods for realizing a glasses-free reflective 3D display.

SUMMARY OF THE INVENTION

Provided are glasses-free reflective 3D color displays that use a lenticular lens method in order to avoid difficulties in using external light as a light source.

Additional aspects will be set forth in part in the description which follows and, in part, will be apparent from the description, or may be learned by practice of the presented example embodiments.

According to some example embodiments of the present invention, a glasses-free reflective 3D color display includes: a reflective color display configured to display a reflective color image by using light entering from the outside and configured to form a left eye image and a right eye image; and a lens array arranged over the reflective color display and configured so that a lens is provided over at least one pair of pixels of the reflective color display and configured to separate the left eye image from one of the pixels of the pair and the right eye image from the other one of the pixels of the pair formed by the reflective color display.

This 3D color display makes use of a reflective native display in combination with a lens array for the view forming function.

The reflective color display may include a reflective color filter that includes a plurality of reflective color filter elements per unit pixel, and a shutter configured to variably control an intensity of light entering the reflective color filter to form a left eye color image and a right eye color image on the pair of pixels.

The shutter arrangement provides the required color filitering of the incident light before it is reflected through the lens array to form the multiple images.

The reflective color filter may have a specular reflection characteristic.

This provides improved efficiency of the use of incident light compared to a diffusive reflector.

The reflective color filter may be a color filter including multi-layer thin films.

The reflective color filter may be formed by alternately and repeatedly stacking a metal layer and a dielectric layer.

Each of the reflective color filter elements may be formed to reflect a specific color by controlling a thickness of each of the multi-layer thin films.

The metal layer may include a material including silver or other metallic material.

The dielectric layer may include a material selected from the group consisting of $Al_2O_3$, $ZnS$, $TiO_2$, $SiO_2$, $MgF_2$, and $Ta_2O_5$.

The reflective color filter includes a high refractive material layer and a low refractive material layer stacked in an alternating pattern.

Each of the reflective color filter elements may be configured to reflect a specific color by controlling a thickness of each of multi-layer thin films.

The lens array may include a plurality of lenticular lenses, so that each lenticular lens corresponds to the pair of pixels of the reflective color display.

The lenticular lens may be disposed so that a first angle of a focused 3D image is biased in a range from about 5 degrees to about 15 degrees laterally from a normal direction.

The lens array may include a plurality of integral imaging lens arrays so that an integral imaging lens corresponds to the pair of pixels of the reflective color display.

As described above, according to an example embodiment of the present invention, a glasses-free reflective 3D color display may be realized by using a lenticular lens method so as not to disrupt use of external light as a light source and by using the reflective color filter.

Also, the reflective color filter is formed of a structural color filter that reflects light like a specular, and thus, the brightness of reflected light may further be increased.

BRIEF DESCRIPTION OF THE DRAWINGS

These and/or other aspects will become apparent and more readily appreciated from the following description of the example embodiments, taken in conjunction with the accompanying drawings of which:

FIG. 1 is a schematic drawing of a glasses-free reflective 3D color display according to an example embodiment of the present invention;

FIG. 2 is a schematic drawing showing an arrangement of lenticular lenses corresponding to a situation where a light source is located on a front side and a viewer looks at a slight angle with respect to a display;

FIG. 3 is a schematic drawing showing a geometric light path at a lenticular lens in a reflective type;

FIG. 4 is a schematic drawing showing a geometric photonic path at a lenticular lens with respect to a case having a diffusibility;

Figs. 5A, 5B, and 5C respectively show a light condensing state of incident light to a viewer with respect to a case that a color filter is specular, a case that the color filter is an ideal diffusive, and a case that the color filter is a real diffusive limited by a lenticular lens structure;

FIG. 6A is a drawing showing an angle 2A in which an entire pixel p is viewed;

FIG. 6B is a drawing showing an angle O in which a pixel is actually viewed by a lenticular lens structure; and

FIG. 7 is a schematic drawing of a glasses-free reflective 3D color display according to another example embodiment of the present invention.

DETAILED DESCRIPTION OF THE EMBODIMENTS

As described above, in order to display a 3D image on a reflective display used outdoors, a glasses-free 3D display is beneficial in comparison to a stereoscopic display that requires a viewer to additionally use a pair of glasses all the time.

A parallax barrier and a lenticular lens method are typical methods used for realizing a glasses-free 3D image display. These methods should ensure that the use of external light as a light source is not disrupted, and if the light source is disrupted, the use of lenticular lenses is appropriate.

A reflective display in which it is assumed that incident light enters in the same direction as the viewer with respect to a display plane requires a structure that does not interrupt the incident light as much as possible. Accordingly, of the parallax barrier and the lenticular lens structures that are currently general methods for realizing a glasses-free 3D image display, the parallax barrier structure is not suitable to apply to a reflective display since the parallax barrier structure blocks half of the incident light.

A transmission display makes use of a single-direction optical path to the eyes, since a light source is disposed on an opposite side of the lenticular lens, with a display plane interposed between the light source and the lenticular lens. Unlike the transmission display, in a reflective display, since both the incident light and reflective light pass through the lenticular lens, the lenticular lens has an effect on both the incident light and the reflected light as well as providing the binocular disparity.

Also, when a lenticular lens is applied to a general transmission display, it is assumed that light is incident from the opposite side of the display plane from an angle perpendicular to the display plane. However, in a reflective display, an axis that is exactly perpendicular to a display plane corresponds to a situation in which a light source is placed between the eyes of an observer and the reflective display, and thus, is not a natural situation. Accordingly, a situation in which incident light and light reflected by the display progress in paths which are not perpendicular to the display plane should be considered.

In a glasses-free reflective 3D color display according to an example embodiment of the present invention, a reflective color filter is realized in a multi-layer thin film to indicate an interference color by specular reflection. Thus, a reflective color display suitable for a glasses-free 3D display is realized having higher brightness and responding well to an optical path in a lenticular lens through the specular reflection.

Hereinafter, a glasses-free reflective 3D color display according to the present invention will be described with reference to drawings. In the drawings, like reference numerals denote like elements, and the sizes and thicknesses of constituent elements are exaggerated for clarity and convenience of explanation.

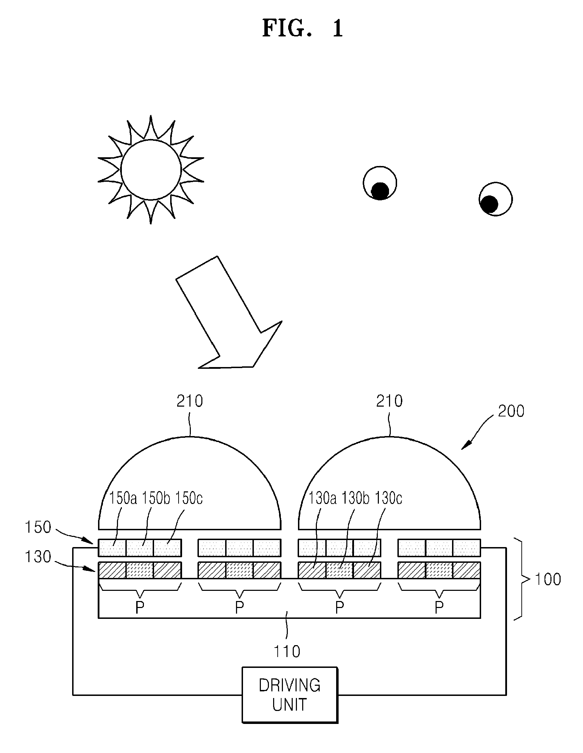

FIG. 1 is a schematic drawing of a glasses-free reflective 3D color display according to an example embodiment of the present invention. In FIG. 1 and the following drawings, the structure of reflective color filters and shutters of regions corresponding to two pairs of pixels of the glasses-free reflective 3D color display is shown for clarity. The glasses-free reflective 3D color display includes a two dimensional pixel array and each pixel includes a plurality of subpixels. For example, each pixel includes R, G, and B subpixels.

Referring to FIG. 1, the glasses-free reflective 3D color display includes a reflective color display 100 and a lens array 200 in which a single lens corresponds to a pair of pixels of the reflective color display 100. The reflective color display 100 displays a reflective color image by using light incident from the outside, and a driving unit drives the reflective color display 100 to form a left eye color image and a right eye color image. The lens array 200 separates the left eye color image and the right eye color image formed in the reflective color display 100.

The reflective color display 100 includes reflective color filter 130 and shutter 150 that are driven by the driving unit and variably control intensity of light incident to the reflective color filter 130. The reflective color display 100 may have a structure in which the reflective color filter 130 is formed on a substrate 110 and the shutter 150 is disposed on the reflective color filter 130. The reflective color display 100 may be manufactured to realize a full color by the mounted reflective color filter 130.

The reflective color filter 130 may include a plurality of reflective color filter elements 130a, 130b, and 130c. For example, the reflective color filter 130 may include R, G, and B reflective color filter elements per unit pixel. The reflective color filter elements 130a, 130b, and 130c per unit pixel of the reflective color filter 130 may realize any combination that forms a color region in a color space.

The reflective color filter 130 may be configured to reflect light that is incident in an arbitrary direction, such as specular light, as a mirror image. The reflective color filter 130 may be formed as a multi-layer thin film color filter, for example, a multi-layer thin film photonic crystal color filter. Each of the reflective color filter elements 130a, 130b, and 130c may be formed to reflect only light of a specific color by controlling a thickness of each layer of the multi-layer thin films. The multi-layer thin films of the reflective color filter 130 may be formed by alternately and repeatedly stacking a metal layer and a dielectric layer or by alternately stacking a high refractive material layer and a low refractive material layer to amplify or erase a specific wavelength by a mutual interference of reflection between the thin films.

Thus, the multi-layer thin films of the reflective color filter 130 may reflect a specific wavelength of incident light. If the thickness of each layer of the thin films of each of the reflective color filter elements 130a, 130b, and 130c is formed to reflect a specific color, the reflective color filter elements 130a, 130b, and 130c may selectively reflect light of color, for example, red color R, green color G, and blue color B. The reflective color filter elements 130a, 130b, and 130c are formed to form a multi-layer thin film structure by using the same material regardless of the color to be selectively reflected, and may be formed to function as reflective red color R, green color G, and blue color B elements by differentiating the thicknesses of the thin films. For example, the thickness of each layer of the multi-layer thin films of the reflective color filter element 130a may be defined to reflect only light of red color R, the thickness of each layer of the multi-layer thin films of the reflective color filter element 130b may be defined to reflect only light of green color G, and the thickness of each layer of the multi-layer thin films of the reflective color filter element 130c may be defined to reflect only light of blue color B. If the reflective color filter elements 130a, 130b, and 130c are structured with a metal layer and a dielectric layer alternately and repeatedly stacked, the multi-layer thin films may be formed to have a regularity, for example a photonic crystal structure, by forming the metal layers to have the same thickness as each other and also the dielectric layers to have the same thickness as each other.

Similarly, if the reflective color filter elements 130a, 130b, and 130c are structured with a high refractive material layer and a low refractive material layer alternately and repeatedly stacked, the multi-layer thin films may be formed to have a regularity, for example a photonic crystal structure, by forming the high refractive material layers to have the same thickness as each other and also the low refractive material layers to have the same thickness as each other.

If the reflective color filter elements 130a, 130b, and 130c are structured with a metal layer and a dielectric layer alternately and repeatedly stacked, the metal layer may include or be formed of a material containing silver, and the dielectric layer may include or be formed of a material selected from the group consisting of $Al_2O_3$, $ZnS$, $TiO_2$, $SiO_2$, $MgF_2$, and $Ta_2O_5$.

If a metal layer is used in the reflective color filter 130 as described above, there is nearly no color change even though a viewing angle is varied, and thus, a viewing angle to the color may be widened.

The size of the reflective color filter elements 130a, 130b, and 130c, for example, R, G, and B color filter elements included in a unit pixel of the reflective color filter 130, may be formed larger a coherence length of white light, for example 10 $\mu$m or more, in order to prevent a diffractive interference between the reflective color filter elements 130a, 130b, and 130c.

The shutter 150 variably controls the intensity of light incident on the reflective color filter 130 so that a left eye color image is formed on a pixel and a right eye color image is formed on the other pixel in each pair of pixels. The shutter 150 may be provided to correspond to the arrangement of the reflective color filter elements 130a, 130b, and 130c of the reflective color filter 130. For example, the shutter 150 may be formed to have a two dimensional pixel array structure, and include a plurality of subpixels 150a, 150b, and 150c corresponding to the reflective color filter elements 130a, 130b, and 130c in a unit pixel of the reflective color filter 130.

The lens array 200 may be formed of a plurality of lenticular lens arrays in which a single lenticular lens 210 is arranged to correspond to a pair of pixels of the reflective color display 100. In order to display a 3D image of 2-views, that is, left eye and right eye views by separating an image, a single lenticular lens unit may be disposed to correspond to a pixel that forms a left eye image and another pixel that forms a right eye image. As a result, an image obtained by the reflective color display 100 may be focused in 2-views of a left eye color image and a right eye color image.

According to the glasses-free reflective 3D color display according to an example embodiment of the present invention, two pixels that realize a single complete full color form a pair, and one of the two pixels reproduces a color image corresponding to the left eye and the other pixel reproduces a color image corresponding to the right eye. Each lenticular lens 210 may correspond to a column of pairs of pixels, and each pair can be considered to be a 3D image display unit.

The lenticular lens 210 may be designed for a situation in which left and right eyes exist on a vertical axis of the lenticular lens 210, or a situation in which a first angle (corresponding to 0th-order light for diffracted light) of a 3D image focused by the lenticular lens 210 is biased from about 5 degrees to about 15 degrees from the vertical axis. In other words, the first angle for the 3D image may be directly (normally) in front of the display, or it may be laterally to the side of this direction.

In the above two situations, the lenticular lens 210 may be designed so that a path of light to the viewer's eyes is provided by an accurate specular reflection with respect to incident light from a virtual view point. The virtual view point is at an angle to the vertical that is equal to the angle between the viewer's eye and the vertical line of the display, with the viewer and the virtual view point located at opposite sides of the vertical line. The lenticular lenses 210 should be arranged in a vertical direction whereas the viewer's eyes are aligned in a horizontal direction.

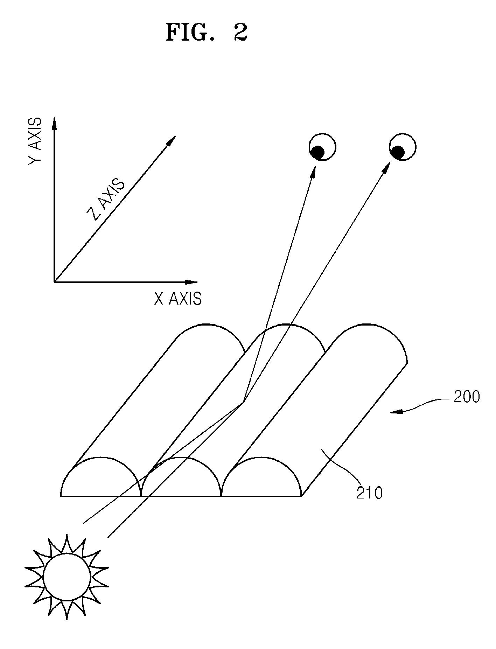

FIG. 2 is a schematic drawing showing an arrangement of lenticular lenses 210 corresponding to a situation in which a light source is located on a front side and a viewer looks at a slight angle with respect to a display.

Accordingly, as indicated in FIG. 2, when a light source exists on a front side of the lenticular lenses 210, it may be considered similar to an optical path of a transmission type display in which light progresses perpendicularly with respect to the display plane.

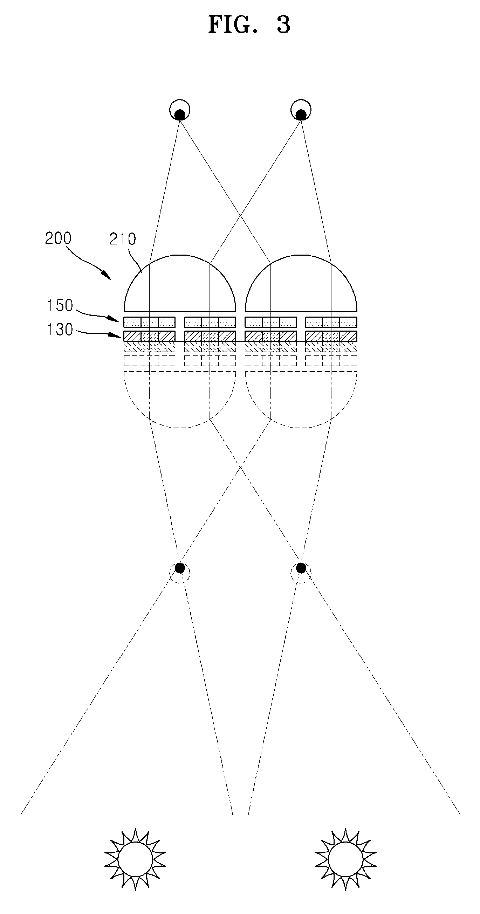

FIG. 3 is a schematic drawing showing a geometric light path at the lenticular lens 210 in a reflective type display. In FIG. 3, it may be considered that a light source exists in 2 points corresponding to the two eyes with respect to a display plane. This corresponds well to a situation in which uniform light enters in all directions in an external light atmosphere.

In a reflective display, the display plane is regarded as a mirror surface. Thus, as indicated in FIG. 3, it may be considered that a virtual light source and a virtual optical path exist symmetrically on opposite sides of the display plane.

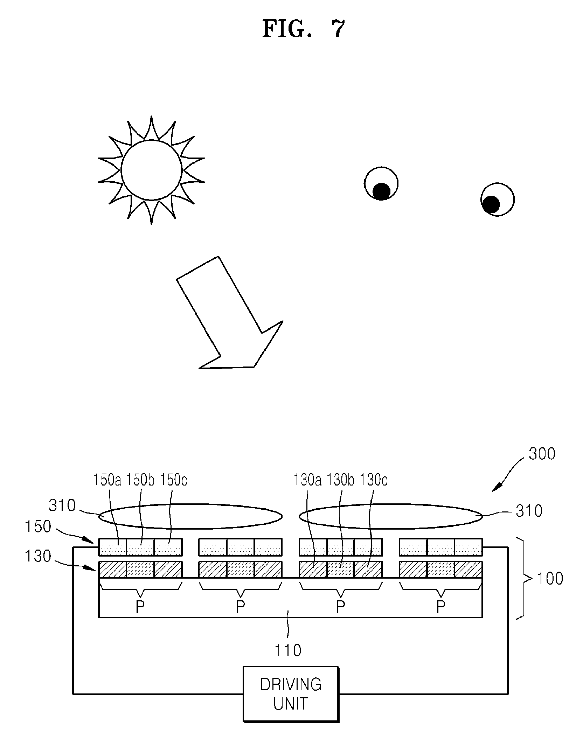

A z-axis direction of FIG. 2 may be regarded as being within a plane which defines the the progress of light, and thus the cylindrical shape lenticular lenses 210 are arranged with respect to the z-axis direction. Also, as described below with reference to FIG. 7, lenses 310 (refer to FIG. 7) making use of an integral imaging method may be arranged to be discontinuous in the z-axis direction with respect to the pixels. Therefore, the light focusing efficiency of reflective pixels may be increased and accordingly, the brightness of the display may be increased. This is particularly useful for increasing brightness of outdoor advertisement displays because angles to view the outdoor advertisement display in a perpendicular direction are limited. Thus, the above arrangement may gather light from angles that are not directly corresponding to the viewing angle of eyes.

In the glasses-free reflective 3D color display according to an example embodiment of the present invention, as described above, the reflective color filter 130 may be formed to have a specular reflection characteristic.

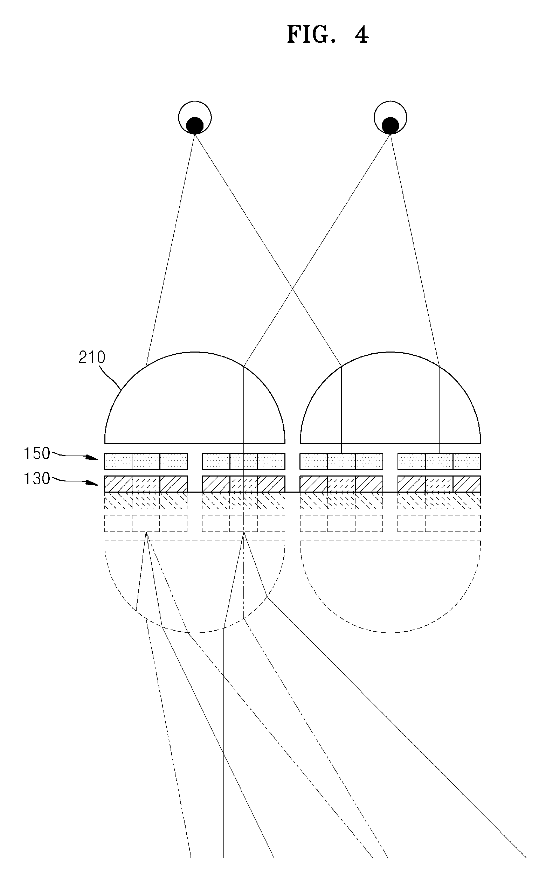

Here, if a reflection surface that reflects incident light has a diffusive reflection characteristic, not a specular reflection characteristic, as indicated in FIG. 4, a portion of light that enters to the display plane from every direction is diffusively reflected. In order to emit reflected light having the same intensity as that of incident light in the same area, according to a definition such as Equation 2, light should be input in all remaining angles. Equation 1 shows a relationship between the intensity $I_{input}$ of incident light and the intensity $I_{output}$ of reflected light when a reflection surface has a specular reflection characteristic. Equation2 shows a relationship between the intensity $I_{input}$ of incident light and the intensity $I_{output}$ of reflected light when a reflection surface has a diffusive reflection characteristic.

[Equation 1]

$$I_{output} = I_{input}$$

[Equation 2]

$$I_{output} = \frac{1}{\pi} \int_0^{\pi/2} d\theta\, I_{input,\ diffusive}$$

$$= \frac{I_0}{\pi} \int_0^{\pi/2} d\theta\, \cos\theta$$

When a reflective color filter has an ideal diffusive reflection characteristic as in a dye type color filter, for example an absorption type color filter, an output when the reflective color filter has a specular reflection characteristic and an output when the reflective color filter has an ideal diffusive reflection characteristic are equal. This corresponds to a situation when incident light having the same intensity enters in all directions from 0 degree to 180 degrees with respect to a diffusive surface.

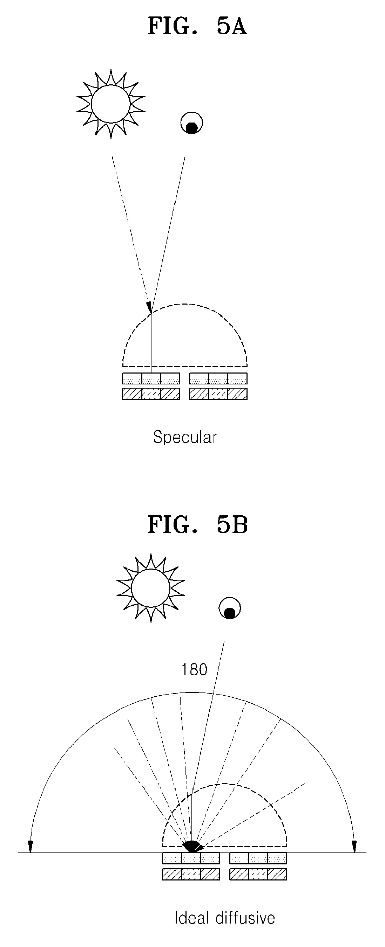

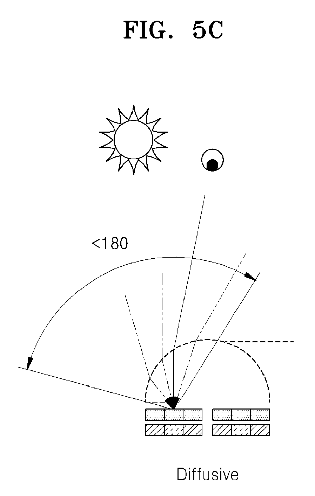

FIGS. 5A through 5C show a focusing state of incident light by a viewer when a reflective color filter has a specular reflection characteristic and a diffusive reflection characteristic. FIGS. 5A, 5B, and 5C respectively show a focusing state of incident light to a viewer when the reflective color filter is specular, when the reflective color filter is an ideal diffusive, and when the reflective color filter is a real diffusive limited by a lenticular lens structure.

When the reflective color filter has a specular reflection characteristic, as indicated in FIG. 5A, the intensity of a light source at the incident angle corresponding to a specular reflection angle enters the eyes. In the case of a dye color filter, as depicted in FIG. 5B, portions of incident light entering the color filter in all directions are scattered and enter the eyes. However, as indicated in FIG. 5C, due to a lenticular lens structure, light beyond an opening angle of the lenticular lens 210 may not enter to the eyes. FIG. 5 corresponds to a case that a reflection surface is included on a dye color filter, for example, a typical absorptive color filter.

As shown in FIG. 5C, light in all directions may not enter the color filter due to the shape of the lenticular lens 210, and, for example, approximately 90% of total external light may enter to the eyes.

Accordingly, when the display plane is a specular surface, the brightness of reflected light is increased.

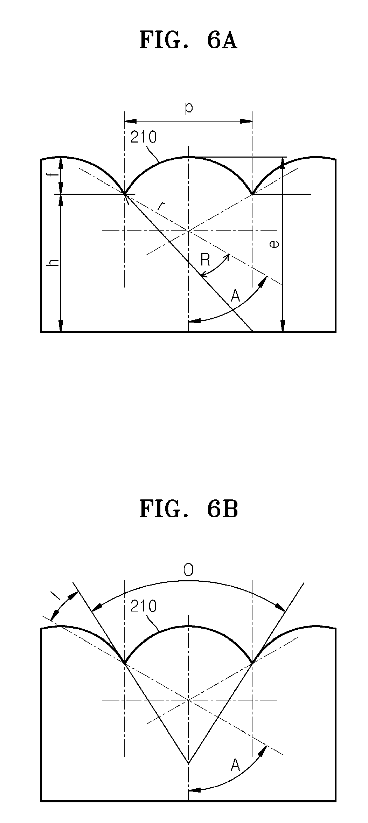

FIG. 6A is a drawing showing an angle 2A in which an entire pixel p is viewed. FIG. 6B is a drawing showing an angle O in which a pixel is actually viewed by a lenticular lens structure. Upon comparing FIG. 6A and FIG. 6B, it is seen that the angle O in which the real pixel is viewed is reduced as much as 21 from the angle 2A in which the entire pixel is viewed. Here, r is a radius of curvature of the lenticular lens 210, h is minimum distance between a pixel and the lenticular lens 210, and p is a pixel size. Also, R=A-arctan (p/h).

When O =64.6°, p = 336.65$\mu$m, r = 190.5$\mu$m, h=457$\mu$m, and refractive index n =.1.557, calculated brightness of a reflected light is approximately 0.9.

As described above, since approximately 90% of the total external light enters the reflective color filter 130 due to the lenticular lens 210 structure, when the reflective color filter 130 has a diffusive reflection characteristic, the brightness of the reflected light is reduced as much as the diffusion. However, in the current example embodiment, when the reflective color filter 130 is configured to have a specular reflection characteristic, a reflected light has the intensity of the incident light. Accordingly, the brightness of the reflected light may be increased by minimum about 1.1 times or more when compared to a general case. Here, the about 1.1 times is a value obtained by assuming that an absorption rate of an absorptive color filter is zero (for the colour to be reflected) for a reflective color filter 130 with a diffusive reflection characteristic. This is an example of the structure of an absorptive color filter and a reflection surface generally applied to a reflective display. In addition, an absorptive color filter acutally has a self-color absorption rate. Therefore, when the reflective color filter 130 with a specular reflection characteristic is used, as in the current example embodiment, the brightness of reflected light may be increased by at least about 1.5 times to about two times greater than when the reflective color filter 130 with a diffusive reflection characteristic is used.

In the descriptions above, for example, an example embodiment of the glasses-free reflective 3D color display with a lenticular lens array formed of lenticular lenses as the lens array 200 is shown and described. However, example embodiments of the present invention are not limited thereto.

As depicted in FIG. 7, the glasses-free reflective 3D color display according to an example embodiment of the present invention may include, as a lens array 300, an array of lenses 310 of an integral imaging method in which the lenses 310 are disconnected in a vertical direction (in the z axis direction of FIG. 2) with respect to the pixels. At this point, a single integral imaging lens is disposed to correspond to a pair of pixels of the reflective color display.

In this way, a condensing efficiency with respect to reflective pixels may further be increased by arranging the lenses 310 of an integral imaging method whereby the lenses 310 are disconnected in the z-axis with respect to the pixels, and accordingly, the brightness of the pixels may further be increased. For outdoor advertisement displays, an angle in a perpendicular direction to view the displays is limited. Therefore, this is particularly useful for increasing brightness of outdoor advertisement displays by gathering light of angles that are not directly corresponding to the viewing angle of eyes.

As described above, in the glasses-free reflective 3D color display according to an example embodiment of the present invention, a color display that reflects external light may reproduce a glasses-free reflective 3D image. Thus, it is possible to obtain an image having the same quality as an image generated by a transmission type glasses-free 3D display.

The glasses-free reflective 3D color display according to an example embodiment of the present invention may be used in outdoor sign boards, mobile phones, or portable game devices with mobile displays. For an outdoor display installed in outside, since an external light source, such as the sun, is typically present above the passers-by, it is possible that a viewer sees a 3D image from the outdoor display when the he passes a specific point. In this case, the outdoor display may be effective in attracting the interest of more passers-by in comparison to a conventional display.

Also, in the case of a mobile display that is kept in one hand, an image is typically viewed in a perpendicular direction to the display plane. Therefore, realization of a 3D image according to an example embodiment of the present invention is expected to increase performance of mobile display in combination with the low power consumption, which is a merit of a reflective display.

It should be understood that the example embodiments described therein should be considered in a descriptive sense only and not for purposes of limitation. Descriptions of the features or aspects within each example embodiment should typically be considered as available for other similar features or aspects in other example embodiments.

## Claims

1. A glasses-free reflective 3D color display comprising:

   a reflective color display configured to display a reflective color image by using light entering from the outside and configured to form a left eye image and a right eye image; and
   a lens array arranged over the reflective color display and configured so that each lens is provided over at least one pair of pixels of the reflective color display and configured to separate the left eye image from one of the pixels of the pair and the right eye image from the other one of the pixels of the pair formed by the reflective color display.

2. The glasses-free reflective 3D color display of claim 1, wherein the reflective color display comprises:

   a reflective color filter including a plurality of reflective color filter elements per unit pixel; and
   a shutter configured to variably control an intensity of light entering the reflective color filter to form a left eye color image and a right eye color image on the pair of pixels.

3. The glasses-free reflective 3D color display of claim 2, wherein the reflective color filter has a specular reflection characteristic.

4. The glasses-free reflective 3D color display of claim 2 or 3, wherein the reflective color filter is a color filter including multi-layer thin films.

5. The glasses-free reflective 3D color display of claim 4, wherein the reflective color filter is formed by alternately and repeatedly stacking a metal layer and a dielectric layer.

6. The glasses-free reflective 3D color display of claim 5, wherein each of the reflective color filter elements is formed to reflect a specific color by controlling a thickness of each of the multi-layer thin films.

7. The glasses-free reflective 3D color display of claim 5 or 6, wherein the metal layer includes a material including silver or other metallic material.

8. The glasses-free reflective 3D color display of claim 5, 6 or 7, wherein the dielectric layer includes a material selected from the group consisting of $Al_2O_3$, ZnS, $TiO_2$, $SiO_2$, $MgF_2$, and $Ta_2O_5$.

9. The glasses-free reflective 3D color display of claim 2, 3 or 4, wherein the reflective color filter includes a high refractive material layer and a low refractive material layer stacked in an alternating pattern.

10. The glasses-free reflective 3D color display of claim 9, wherein each of the reflective color filter elements is configured to reflect a specific color by controlling a thickness of each of multi-layer thin films.

11. The glasses-free reflective 3D color display of any preceding claim, wherein the lens array includes a plurality of lenticular lenses so that each lenticular lens corresponds to the pair of pixels of the reflective color display.

12. The glasses-free reflective 3D color display of claim 11, wherein the lenticular lens is configured so that a first angle of a focused 3D image is laterally to the side of a normal direction in a range from about 5 degrees to about 15 degrees.

13. The glasses-free reflective 3D color display of any one of claims 1 to 10, wherein the lens array includes a plurality of integral imaging lenses so that an integral imaging lens corresponds to the pair of pixels of the reflective color display.

# FIG. 1

# FIG. 2

# FIG. 3

# FIG. 4

## FIG. 5A

Specular

## FIG. 5B

180

Ideal diffusive

## FIG. 5C

<180

Diffusive

## FIG. 6A

## FIG. 6B

# FIG. 7

Europäisches
Patentamt

European
Patent Office

Office européen
des brevets

**EUROPEAN SEARCH REPORT**

Application Number

EP 14 15 2675

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/167846 A1 (NIIOKA SHINYA [JP] ET AL) 2 July 2009 (2009-07-02) | 1 | INV. G02B27/22 G02B5/28 |
| Y | * paragraphs [0077], [0130] * <br> * figure 1 * <br> ----- | 2-13 | |
| Y | WO 2012/012177 A1 (3M INNOVATIVE PROPERTIES CO [US]; MERRILL WILLIAM WARD [US]; DUNN DOUG) 26 January 2012 (2012-01-26) * page 69, line 26 - line 29 * <br> ----- | 2-13 | |
| X | WO 03/061983 A1 (NANOVENTIONS INC [US]; STEENBLIK RICHARD A [US]; HURT MARK J [US]; KNO) 31 July 2003 (2003-07-31) | 1 | |
| Y | * figure 1 * <br> ----- | 2-13 | |

TECHNICAL FIELDS
SEARCHED (IPC)

G02B

The present search report has been drawn up for all claims

| Place of search | Date of completion of the search | Examiner |
|---|---|---|
| Munich | 11 April 2014 | Denise, Christophe |

EPO FORM 1503 03.82 (P04C01)

## ANNEX TO THE EUROPEAN SEARCH REPORT
## ON EUROPEAN PATENT APPLICATION NO.

EP 14 15 2675

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2014

| Patent document cited in search report | | Publication date | Patent family member(s) | | Publication date |
|---|---|---|---|---|---|
| US 2009167846 | A1 | 02-07-2009 | CN | 101470296 A | 01-07-2009 |
| | | | CN | 103018947 A | 03-04-2013 |
| | | | JP | 5152718 B2 | 27-02-2013 |
| | | | JP | 2009157116 A | 16-07-2009 |
| | | | US | 2009167846 A1 | 02-07-2009 |
| WO 2012012177 | A1 | 26-01-2012 | CN | 103038681 A | 10-04-2013 |
| | | | EP | 2588903 A1 | 08-05-2013 |
| | | | JP | 2013539543 A | 24-10-2013 |
| | | | KR | 20130040233 A | 23-04-2013 |
| | | | US | 2013094084 A1 | 18-04-2013 |
| | | | WO | 2012012177 A1 | 26-01-2012 |
| WO 03061983 | A1 | 31-07-2003 | EP | 1476317 A1 | 17-11-2004 |
| | | | EP | 1476782 A1 | 17-11-2004 |
| | | | US | 2003179364 A1 | 25-09-2003 |
| | | | US | 2003232179 A1 | 18-12-2003 |
| | | | US | 2007269725 A1 | 22-11-2007 |
| | | | US | 2011299150 A1 | 08-12-2011 |
| | | | WO | 03061983 A1 | 31-07-2003 |
| | | | WO | 03062900 A1 | 31-07-2003 |

EPO FORM P0459

For more details about this annex : see Official Journal of the European Patent Office, No. 12/82